# EUROPEAN PATENT SPECIFICATION

(11) **EP 0 699 497 B1**
(45) Date of publication and mention of the grant of the patent: **07.01.1998**
(21) Application number: 95306126.4
(22) Date of filing: 01.09.1995
(51) Int. Cl.: B23H 7/02

(54) **A liquid leakage preventing mechanism for a liquid tank**
Lecksicherungsvorrichtung für Flüssigkeitsbehälter
Dispositif de prévention de fuites pour un réservoir de liquide

(30) Priority: 05.09.1994 JP 236013/94
(43) Date of publication of application: 06.03.1996
(73) Proprietor: FANUC LTD., Minamitsuru-gun, Yamanashi 401-05 (JP)
(72) Inventor: Kita, Yuki, Room 10-203, Fanuc Manshonharimomi, Minamitsuru-gun, Yamanashi 401-05 (JP); Takayama, Yushi, Fanuc Dai3virakaramatsu, Minamitsuru-gun, Yamanashi 401-05 (JP); Ishihara, Mitsuyoshi, Fanuc Dai3virakaramatsu, Minamitsuru-gun, Yamanashi 401-05 (JP)
(74) Representative: Billington, Lawrence Emlyn

(56) References cited:
- DE-A- 2 018 132
- DE-A- 3 934 638
- GB-A- 2 239 908
- US-A- 5 020 425

## Description

The present invention relates to a liquid leakage preventing mechanism for a liquid tank.

A preferred, although not exclusive, application of the present invention is to a wire electrical discharge machining apparatus of a type such that electrical discharge between a wire electrode and a workpiece is carried out in a machining liquid stored in a liquid tank.

In some cases, in a wire electrical discharge machining apparatus, a workpiece is immersed entirely in a machining liquid as it is subjected to electrical discharge machining .

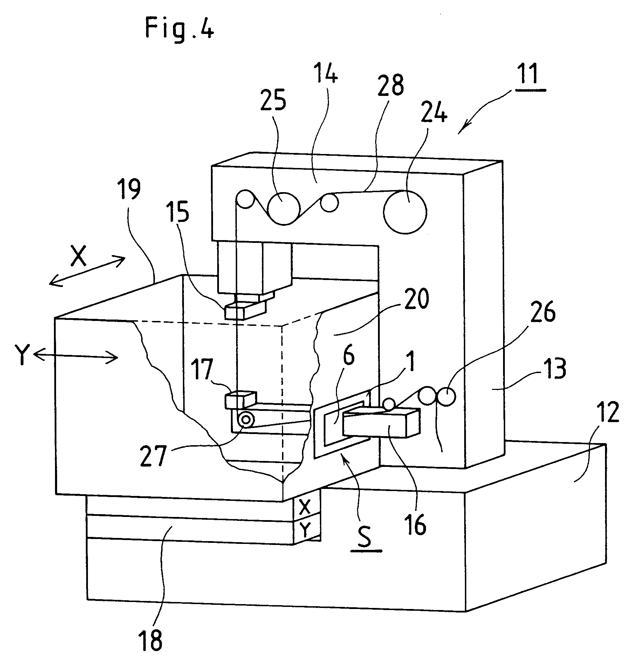

FIG. 4 shows an example of an arrangement of apparatus of this type.

Referring to FIG. 4, a wire electrical discharge machining apparatus 11 comprises a base 12 and a column 13 set up thereon. The upper portion of the column 13 projects horizontally and forms a horizontal section 14. An upper nozzle 15 is provided on the underside of the distal end portion of the horizontal section 14. A lower arm 16 is fixed horizontally to the lower part of the column 13, and a lower nozzle 17 is attached to the distal end of the lower arm 16 so as to face the upper nozzle 15. Further, the base 12 is provided with an XY table 18, which is fitted with a liquid tank 19. Thus, the liquid tank 19 can be moved in X and Y directions perpendicular to each other on a plane by means of the XY table 18.

A supply reel 24, a brake roller 25, and a feed roller 26 are rotatably mounted on a front wall of the column 13, while a guide roller 27 is rotatably mounted on the distal end of the lower arm 16. A wire electrode (hereinafter referred to as wire) 28 is drawn out from the supply reel 24, and passes around the brake roller 25, upper nozzle 15, lower nozzle 17, and guide roller 27, passes through the lower arm 16, and finally is wound around the feed roller 26.

The lower arm 16 penetrates one side wall 20 of the liquid tank 19. The side wall 20 is formed with a window hole (not shown) which has a height and a width such that the liquid tank 19 is allowed to move in the Y direction (longitudinal direction of the lower arm 16) and the X direction (crosswise direction of the side wall 20) with respect to the lower arm 16. A liquid leakage preventing mechanism S is provided between the side wall 20 of the liquid tank 19 and the lower arm 16 lest the machining liquid in the tank 19 leak out through the gap between the window hole and the lower arm 16.

The following is a description of an outline of the liquid leakage preventing mechanism S. First, a seal base 1 having an aperture with the same shape and size as the window hole is fixed to the side wall 20 so that the window hole and the aperture overlap each other. Further, a seal plate 6 is fitted on the lower arm 16 for movement in the longitudinal direction (Y direction). The plate 6 has a width (X-direction length) large enough to close the window hole at all times when the liquid tank 19 moves in the X direction with respect to the lower arm 16. Thus, if the tank 19 moves in the X and/or Y direction with respect to the lower arm 16, liquid leakage can be prevented in a manner such that close contact between the seal base 1 and the seal plate 6 and close contact between the lower arm 16 and the plate 6 can be maintained continually.

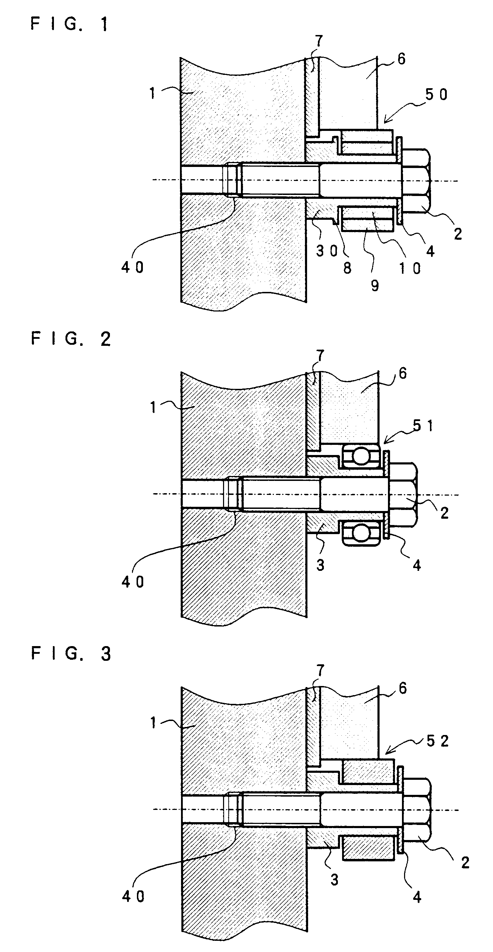

Referring now to the sectional views of FIGS. 2 and 3, two examples of a liquid leakage preventing mechanism S will be described in detail.

In the example shown in FIG. 2, numeral 1 denotes the seal base which is fixed to the outer surface of the one side wall 20 of the liquid tank 19. In FIG. 2, the side wall 20 of the tank 19 is not shown. A plurality of tapped holes 40 (two in number) are formed in the seal base arranged in the crosswise direction (X direction) thereof.

Fitted in each tapped hole 40 is a bolt 2 which is fitted with a roller pipe 3 and a washer 4. With this arrangement, the seal plate 6 can smoothly move in the lateral X direction (perpendicular to the drawing plane of FIG. 2) in a manner such that it is prevented from dropping by a bearing 51 supported by the bolt 2 which is screwed in the seal base 1.

Moreover, the seal base 1 is provided with a mechanism (roller or the like, not shown) for continually attracting the seal plate 6, which moves relatively to the seal base 1 in the X direction, to the side of the base 1, thereby maintaining the close contact between the base 1 and the plate 6.

A seal member 7 formed of Teflon (trademark of polymer of tetrafluoroethylene, from DuPont de Nemours & Co.) or the like is fixed to the seal base 1. The seal member 7 is directly in contact with the seal plate 6 which moves relatively to the seal base 1 in the X direction.

According to the example shown in FIG. 2, however, sludge in the machining liquid is caught by balls of the bearing 51 if the liquid leaks out through a narrow gap between the seal member 7 and the liquid tank seal plate 6. Thus, smooth rotation of the bearing 51 cannot be secured for a long period of time.

In the example shown in FIG. 3, a low-friction Teflon roller 52 is used in place of the bearing 51 shown in FIG. 2. For the arrangement of other components, the two examples are identical.

Since the Teflon roller 52 has a low wear resistance, it is liable to be worn and reduced in diameter by contact with the lower edge of the liquid tank seal plate 6. Accordingly, the accuracy of the vertical mounting position of the seal plate 6 may possibly be lowered over time. If the sludge in the machining liquid caught by the roller 52 hinders the roller rotation, moreover, the roller 52 may be asymmetrically worn under the influences of the friction between the roller 52 and the seal plate 6 and free sludge particles in the region of frictional contact. Thus, the rotation of the roller 52 becomes more difficult, and the asymmetrical wear is accelerated.

The object of the present invention is to provide a liquid leakage preventing mechanism for a liquid tank which reduces or eliminates the aforementioned drawbacks, and can securely maintain smooth sliding motion of a seal plate on the side wall of a liquid tank, and the accuracy of the mounting position of the seal plate, for a long period of time.

According to the present invention, each of rollers for supporting a seal plate which constitutes a liquid leakage preventing mechanism for a liquid tank comprises different materials, there being an outside portion having an outer peripheral surface in contact with the seal plate and an inside portion having an inner peripheral surface in contact with a support shaft for rotatably supporting the roller. The outside portion is formed or is treated with a material with a high wear resistance, while the inside portion is formed of or is treated with a material with a low coefficient of friction.

With a roller provided in this manner, wear of the roller in sliding contact with the seal plate can be reduced, and the roller can smoothly rotate without any substantial friction with a support shaft.

The foregoing and other objects and features of embodiments of the invention will become apparent from the following description of preferred embodiments of the invention with respect to the accompanying drawings, in which:
FIG. 1 is a sectional view showing one embodiment of a liquid leakage preventing mechanism for a liquid tank in a wire electrical discharge machining apparatus according to the invention;
FIG. 2 is a sectional view showing an example of a liquid leakage preventing mechanism for a liquid tank in a wire electrical discharge machining apparatus which does not incorporate the invention;
FIG. 3 is a sectional view showing another example of a liquid leakage preventing mechanism for the liquid tank in a wire electrical discharge machining apparatus which does not incorporate the invention; and
FIG. 4 is a schematic view showing an example of an electrical discharge machining apparatus of a type having a liquid leakage preventing mechanism for a liquid tank.

FIG. 1 is a sectional view showing the details of a liquid leakage preventing mechanism S between the side wall 20 of the liquid tank 19 and the lower arm 16 which are schematically shown in FIG. 4. Many components of this mechanism are identical with their counterparts in the examples described with reference to FIGS. 2 and 3.

In particular, the liquid leakage preventing mechanism S of FIG. 1 resembles the example of FIG. 3 in that it comprises a seal base 1 fixed to the outer surface of one side wall 20 of a liquid tank 19, two tapped holes 40 formed in the seal base 1 arranged in the crosswise direction (X direction) thereof, a bolt 2 engaged with each tapped hole 40 and fitted with a roller pipe 30 and a washer 4, and a roller 50 fitted on the roller pipe 30.

The present invention, however, is notable in that the arrangement of the roller 50 is different from those of the bearing 51 of FIG. 2 and the roller 52 of FIG. 3. Moreover, the roller pipe 30 of the liquid leakage preventing mechanism S in the FIG. 1 embodiment of the invention has a form different from that of the roller pipe 3 shown in FIGS. 2 and 3. These differences will now be described in detail.

The roller 50 has a dual structure including an outer ring 9 formed of polycarbonate, which has a satisfactory wear resistance, and an inner ring 10 formed of low-friction Teflon. The outer and inner rings 9 and 10 are formed in one body by press fitting or with close adhesion, and are integrally rotatable with respect to the roller pipe 30.

On the other hand, the roller pipe 30 is a ring-shaped integral member of brass which includes a flange-shaped collar portion 8 in the center with respect to the axial direction and large- and small-diameter portions on either side of the collar portion 8. The roller pipe 30 is fixed to the seal base 1 by means of the fastening force of the bolt 2 with the aid of the washer 4, and is kept nonrotatable with respect to the bolt 2.

The inner ring 10 of the roller 50 is fitted loosely on the small-diameter portion of the roller pipe 30. As the seal plate 6 moves relatively to the seal base 1 in the X direction, therefore, the roller 50 supports the seal plate 6 while freely rotating with respect to the bolt 2 (or the roller pipe 30).

The axial length of the small-diameter portion of the roller pipe 30 is a little greater than the overall axial thickness of the roller 50, and the axial backlash and disengagement of the roller 50 are restrained by the collar portion 8 and the washer 4.

The seal plate 6 is formed of polyvinyl chloride. A seal member 7, which is mounted on the seal base 1 and slides as the seal plate 6 moves relatively to the seal base 1 in the X direction, is formed of Teflon.

If machining liquid and sludge leak out through the gap between the seal member 7 and the liquid tank seal plate 6 and reach the large-diameter portion of the roller pipe 30, they are blocked on the way by the flange-shaped collar portion 8, so that they cannot reach the small-diameter portion.

When a table carrying the liquid tank 19 thereon is fed in the X direction during wire electrical discharge machining operation, the seal base 1 and the tank 19 move in the X direction with respect to the seal plate 6 and the lower arm 16. In other words, the seal plate 6 moves relatively to the seal base 1 in the X direction.

If the lower edge of the seal plate 6 repeatedly slips on the outer peripheral surface of the roller 50 as the seal plate 6 moves relatively to the seal base 1 in the X-axis direction, the outer peripheral surface of the roller 50 is less liable to be worn by friction with the seal plate 6, since the outer ring 9 of the roller 50, including the outer peripheral surface thereof, is formed of polycarbonate with a high wear resistance. Since the surfaces of contact between the roller 50 and the roller pipe 30 which supports the roller 50 for rotation are the inner peripheral surface of the inner ring 10 of low-friction Teflon and the outer peripheral surface of the brass pipe 30, friction produced between the contact surfaces is so small that the roller 50 can rotate very easily around the roller pipe 30. Thus, the seal plate 6 can be moved with a small force, so that the resistance of table feed cannot be increased.

Since the frictional resistance between the outer ring 9 and the seal plate 6 is higher than that between the inner ring 10 and the roller pipe 30, the roller 50 can easily rotate in response to the movement of the seal plate 6 without slipping. As a result, the outer ring 9 and the seal plate 6 can be prevented from slipping on each other, and therefore, from being worn by slipping. Thus, the measure to counter wear is much more effective than in the case where the roller 50 is formed entirely of a wear-resistant material.

Also, the roller 50 is rotatably fitted on the roller pipe 30 in a manner such that there is hardly any gap between the inner peripheral surface of the inner ring 10 and the outer peripheral surface of the small-diameter portion of the roller pipe 30. If the sludge in the machining liquid enters the interior of the small-diameter portion of the roller pipe 30, therefore, there is little or no possibility of its penetrating the gap between the inner ring 10 and the roller pipe 30 and retarding the rotation of the roller 50. Even if the sludge should penetrate the gap between the inner ring 10 and the roller pipe 30, it would not stay in the gap because Teflon does not allow the sludge to stick to it.

The above is a description of an embodiment of the present invention in which the roller 50 for supporting the seal plate 6 is a combination of the outer ring 9 of polycarbonate and the inner ring 10 of Teflon. The present invention is not, however, limited to those materials, and any other materials with similar properties may naturally be used instead. For example, the outer ring 9 may be formed of phenol resin, acrylic resin, or ABS resin, besides polycarbonate, while the inner ring 10 may be formed of polyacetal, polyethylene, or nylon, as well as Teflon.

In the embodiment described above, moreover, the roller 50 is constructed by forming the outer and inner rings 9 and 10 in one body by press fitting or adhesive bonding so that the rings are integrally rotatable. Alternatively, however, the roller 50 may be designed such that the outer ring 9 is fitted on the inner ring 10 loose enough to allow relative rotation there-between. In this case, the roller 50 can be rotated more smoothly since the outer peripheral surface of the inner ring 10 and the inner peripheral surface of the outer ring 9, as well as the surface of the small-diameter portion of the roller pipe 30 and the inner peripheral surface of the inner ring 10, can be utilized as sliding surfaces for rotation.

In the case where the roller 50 shown in FIG. 1 is designed such that the outer ring 9 is fitted on the inner ring 10 loose enough to allow relative rotation between them, the washer 4 and the flange-shaped collar portion 8 prevent the outer ring 9 from slipping off the inner ring 10. In this case, the washer 4 and the collar portion 8 must have a diameter such that their respective outer peripheral edges reach their corresponding end faces of the outer ring 9. If the washer 4 and the collar portion 8 do not fulfill this requirement, it is necessary separately to provide disconnection preventing means for the outer ring 9, such as circumferential grooves and ridges on the respective sliding surfaces of the outer and inner rings 9 and 10.

Instead of using the dual structure for the roller 50, including the separately formed outer and inner rings 9 and 10 of different materials, furthermore the roller 50 may be formed in the following manner. The roller body is first formed from a single material, and its outer and/or inner peripheral surface is then treated so that the outer and inner peripheral surfaces of the roller 50 have a good wear resistance and low-friction properties, respectively. Chemical plating, electroplating, painting, or some other conventional technique may be used for the surface treatment.

Although the invention has been specifically described and illustrated with reference to a liquid tank containing machining liquid and installed in a wire electrical discharge machining apparatus, it will be appreciated that the described and illustrated liquid leakage preventing mechanism can be applied to liquid tanks in other situations also. Thus the invention is not restricted to the particular application of an arm penetrating a machining liquid tank in a wire electrical discharge machining apparatus, and can be applied to other situations where a member penetrates a liquid tank for relative movement between the member and the tank.

Moreover, it will be appreciated that references to a liquid leakage preventing mechanism in the description and claims are not to be understood as suggesting that absolutely all leakage is stopped. Thus as can be seen from the foregoing description, there sometimes remains the possibility that slight leakage from the tank can occur.

## Claims

1. A liquid leakage preventing mechanism for a liquid tank (19), which comprises: a seal base (1) fixed to a side wall (20) of the liquid tank (19) which is to be penetrated by a member (16), with relative lateral movement being able to occur between the member (16) and the tank side wall (20); a seal plate (6) penetrated by the member (16); and rollers (50) supported rotatably on a plurality of respective support shafts fixed to the seal base (1), with the seal plate (6) being supported for lateral movement on the rotatable rollers (50) when relative lateral movement takes place between the tank side wall (20) on the one hand, and the member (16) and the seal plate (6) on the other hand; the outer peripheral portion of each said roller (50) in contact with the seal plate (6) being formed of a material with a high wear resistance, and the inner peripheral portion of each said roller (50) in contact with the corresponding support shaft being formed of a material which is such that no substantial frictional resistance is generated between the inner peripheral roller portion and the support shaft.

2. A liquid leakage preventing mechanism according to claim 1, wherein each said roller (50) includes an outer ring (9) and an inner ring (10) arranged therein so that the rings (9,10) are prohibited from rotating relatively to each other, the outer peripheral portion of said outer ring (9) and the inner peripheral portion of said inner ring (10) being in contact with the seal plate (6) and the corresponding support shaft (30) respectively.

3. A liquid leakage preventing mechanism according to claim 1, wherein each said roller (50) includes an outer ring (9) and an inner ring (10) arranged therein so that the rings (9,10) are allowed to rotate relatively to each other, the outer peripheral portion of said outer ring (9) and the inner peripheral portion of said inner ring (10) being in contact with the seal plate (6) and the corresponding support shaft (30) respectively, the relevant components being formed of materials such that the frictional resistance between the outer ring (9) and the seal plate (6) is greater than the frictional resistance between the inner ring (10) and the support shaft (30).

4. A liquid leakage preventing mechanism according to claim 2 or 3, wherein said outer ring (9) is formed entirely of polycarbonate, and said inner ring (10) is formed entirely of a polymer of tetrafluoroethylene.

5. A liquid leakage preventing mechanism according to any one of the preceding claims, wherein each support shaft for rotatably supporting a roller (50) includes a bolt (2) secured in the seal base (1) and a ring-shaped member (30) fitted on the bolt (2) so as not to be rotatable relatively to the bolt (2), said ring-shaped member (30) having a large-diameter portion on one side of a flange-shaped collar portion (8) located approximately centrally with respect to the axial direction thereof, and a small-diameter portion on the other side supporting the corresponding roller (50).

6. A liquid leakage preventing mechanism according to claim 5, wherein one end of said ring-shaped member (30) on the small-diameter portion side is in contact with a washer (4) fitted on the bolt (2) so that the roller (50) supported on the small-diameter portion is situated between the washer (4) and the flange-shaped collar portion (8).

7. A liquid leakage preventing mechanism according to claim 6, wherein said collar portion (8) has a diameter such that the collar portion (8), in conjunction with the washer (4), can prevent an outer ring (9), when constituting a part of the roller (50), from slipping off an inner ring (10) which constitutes another part of the roller (50).

8. A liquid leakage preventing mechanism according to any one of the preceding claims, wherein the liquid tank (19) is mounted on a movable table (18) in a wire electrical discharge machining apparatus, with the member (16) being a lower arm of the wire electrical discharge machining apparatus which penetrates an approximately central portion of the seal plate (6), the seal plate (6) moving laterally on the rotatable rollers (30) when the liquid tank is moved with respect to the seal plate (6) and the member (16) as the movable table (18) moves.

## Patentansprüche

1. Flüssigkeitsleck-Verhinderungsmechanismus für einen Flüssigkeitsbehälter (19), der umfaßt: eine Dichtungsbasis (1), die an einer Seitenwand (20) des Flüssigkeitsbehälters (19) befestigt ist, welche von einem Teil (16) mit einer relativen seitlichen Bewegung, die zwischen dem Teil (16) und der Behälter-Seitenwand (20) auftreten kann, durchdrungen wird, eine Dichtungsplatte (6), die von dem Teil (16) durchdrungen wird, und Gleitrollen (50), die drehbar auf einer Vielzahl von jeweiligen Lagerwellen, welche an der Dichtungsbasise (1) befestigt sind, gelagert sind, wobei die Dichtungsplatte (6) zum Zwecke einer seitlichen Bewegung, wenn eine relative seitliche Bewegung zwischen der Behälter-Seitenwand (20) einerseits und dem Teil (16) und der Dichtungsplatte (6) andererseits stattfindet, auf den drehbaren Gleitrollen (50) gelagert ist, der äußere Umfangsteil jeder der Gleitrollen (50), welcher sich in Berührung mit der Dichtungsplatte (6) befindet, aus einem Material mit einer hohen Verschleißfestigkeit gebildet ist und der innere Umfangsteil jeder der Gleitrollen (50), welcher sich in Berührung mit der entsprechenden Lagerwelle befindet, aus einem Material gebildet ist, das derart beschaffen ist, daß kein wesentlicher Reibungswiderstand zwischen dem inneren Umfangsteil der Gleitrolle und der Lagerweile erzeugt wird.

2. Flüssigkeitsleck-Verhinderungsmechanismus nach Anspruch 1, bei dem jede der Gleitrollen (50) einen äußeren Ring (9) und einen derart darin angeordneten inneren Ring (10) enthält, daß die Ringe (9, 10) gegen eine Drehung relativ zueinander gesperrt sind, wobei sich der äußere Umfangsteil des äußeren Rings (9) und der innere Umfangsteil des inneren Rings (10) mit der Dichtungsplatte (6) bzw. der entsprechenden Lagerwelle (30) in Berührung befinden.

3. Flüssigkeitsleck-Verhinderungsmechanismus nach Anspruch 1, bei dem jede der Gleitrollen (50) einen äußeren Ring (9) und einen derart darin angeordneten inneren Ring (10) enthält, daß den Ringen (9, 10) gestattet ist, sich relativ zueinander zu drehen, wobei sich der äußere Umfangsteil des äußeren Rings (9) und der innere Umfangsteil des inneren Rings (10) in Berührung mit der Dichtungsplatte (6) bzw. der entsprechenden Lagerwelle (30) befinden und wobei die entsprechenden Komponenten aus derartigen Materialien gebildet sind, daß der Reibungswiderstand zwischen dem äußeren Ring (9) und der Dichtungsplatte (6) größer als der Reibungswiderstand zwischen dem inneren Ring (10) und der Lagerwelle (30) ist.

4. Flüssigkeitsleck-Verhinderungsmechanismus nach Anspruch 2 oder 3, bei dem der äußere Ring (9) völlig aus Polycarbonat gebildet ist und der innere Ring (10) völlig aus einem Polymer aus Tetrafluoräthylen gebildet ist.

5. Flüssigkeitsleck-Verhinderungsmechanismus nach einem der vorhergehenden Ansprüche, bei dem jede Lagerwelle zum eine Drehung gestattenden Lagern einer Gleitrolle (50) eine Schraube (2), die in der Dichtungsbasis (1) befestigt ist, und ein ringförmiges Teil (30) enthält, das derart auf die Schraube (2) gesetzt ist, daß es nicht relativ zu der Schraube (2) drehbar ist, wobei das ringförmige Teil (30) einen Teil mit großem Durchmesser auf einer Seite eines flanschförmigen Kragenteils (8), der sich angenähert zentral in bezug auf die Axialrichtung desselben befindet, und einen Teil mit kleinem Durchmesser auf der anderen Seite hat, der die entsprechende Gleitrolle (50) lagert.

6. Flüssigkeitsleck-Verhinderungsmechanismus nach Anspruch 5, bei dem sich ein Ende des ringförmigen Teils (30) auf der Seite des Teils mit kleinem Durchmesser in Berührung mit einer Dichtungsscheibe (4) befindet, die derart auf die Schraube (2) gesetzt ist, daß sich die Gleitrolle (50), welche auf dem Teil mit kleinem Durchmesser gelagert ist, zwischen der Dichtungsscheibe (4) und dem flanschförmigen Kragenteil (8) befindet.

7. Flüssigkeitsleck-Verhinderungsmechanismus nach Anspruch 6, bei dem der Kragenteil (8) einen derartigen Durchmesser hat, daß der Kragenteil (8) in Verbindung mit der Dichtungsscheibe (4) einen äußeren Ring (9), wenn er einen Teil der Gleitrolle (50) bildet, daran hindern kann, von einem inneren Ring (10), der einen anderen Teil der Gleitrolle (50) bildet, abzurutschen.

8. Flüssigkeitsleck-Verhinderungsmechanismus nach einem der vorhergehenden Ansprüche, wobei der Flüssigkeitsbehälter (19) auf einem bewegbaren Tisch (18) in einer elektrischen Entladungs-Drahtbearbeitungsvorrichtung montiert ist, wobei das Teil (16) ein unterer Arm der elektrischen Entladungs-Drahtbearbeitungsvorrichtung ist, der einen angenähert zentralen Teil der Dichtungsplatte (6) durchdringt, und wobei sich die Dichtungsplatte (6) seitlich auf den drehbaren Gleitrollen (30) bewegt, wenn der Flüssigkeitsbehälter in bezug auf die Dichtungsplatte (6) und das Teil (16) bewegt wird, wenn sich der bewegbare Tisch (18) bewegt.

## Revendications

1. Mécanisme de prévention de fuite de liquide pour un réservoir de liquide (19), qui comprend: une base d'étanchéification (1) fixée à une paroi latérale (20) du réservoir de liquide (19), qui doit être traversée par un élément (16), un mouvement latéral relatif étant possible entre l'élément (16) et la paroi latérale (20) du réservoir; une plaque d'étanchéification (6) traversée par l'élément (16); et des rouleaux (50) supportés en rotation sur plusieurs arbres de support respectifs fixés à la base d'étanchéification (1), la plaque d'étanchéification (6) étant supportée pour effectuer un mouvement latéral sur les rouleaux rotatifs (50) lorsqu'un mouvement latéral relatif a lieu entre la paroi latérale (20) du réservoir, d'une part, et entre l'élément (16) et la plaque d'étanchéification (6), d'autre part; la portion périphérique externe de chacun desdits rouleaux (50), en contact avec la plaque d'étanchéification (6), étant réalisée en une matière manifestant une résistance élevée à l'usure, et la portion périphérique interne de chacun desdits rouleaux (50), en contact avec l'arbre de support correspondant, étant réalisée en une matière telle qu'aucune résistance importante à la friction n'est générée entre la portion périphérique interne des rouleaux et l'arbre de support.

2. Mécanisme de prévention de fuite de liquide selon la revendication 1, dans lequel chacun desdits rouleaux (50) englobe une couronne externe (9) et une couronne interne (10) arrangées en l'occurrence de telle sorte que l'on empêche les couronnes (9, 10) de tourner l'une par rapport à l'autre, la portion périphérique externe de ladite couronne externe (9) et la portion périphérique interne de ladite couronne interne (10) venant se mettre en contact avec la plaque d'étanchéification (6) et avec l'arbre de support correspondant (30), respectivement.

3. Mécanisme de prévention de fuite de liquide selon la revendication 1, dans lequel chacun desdits rouleaux (50) englobe une couronne externe (9) et une couronne interne (10) arrangées en l'occurrence de telle sorte que les couronnes (9, 10) sont à même de tourner l'une par rapport à l'autre, la portion périphérique externe de ladite couronne externe (9) et la portion périphérique interne de ladite couronne interne (10) venant se mettre en contact avec la plaque d'étanchéification (6) et avec l'arbre de support correspondant (30), respectivement, les composants pertinents étant réalisés à partir de matières telles que la résistance par friction entre la couronne externe (9) et la plaque d'étanchéification (6) est supérieure à la résistance par friction entre la couronne interne (10) et l'arbre de support (30).

4. Mécanisme de prévention de fuite de liquide selon la revendication 2 ou 3, dans lequel ladite couronne externe (9) est réalisée entièrement en polycarbonate et ladite couronne interne (10) est réalisée entièrement en un polymère de tétrafluoréthylène.

5. Mécanisme de prévention de fuite de liquide selon l'une quelconque des revendications précédentes, dans lequel chaque arbre de support destiné à supporter un rouleau en rotation englobe un boulon (2) fixé dans la base d'étanchéification (1) et un élément de forme annulaire (30) disposé sur le boulon (2) en antirotation par rapport au boulon (2), ledit élément (30) de forme annulaire possédant une portion à grand diamètre d'un côté d'une portion de bague (8) en forme de bride située approximativement au centre par rapport à sa direction axiale et une portion à petit diamètre sur l'autre côté supportant le rouleau correspondant (50).

6. Mécanisme de prévention de fuite de liquide selon la revendication 5, dans lequel une extrémité dudit élément (30) de forme annulaire sur le côté de la portion à petit diamètre se trouve en contact avec une rondelle (4) disposée sur le boulon (2) de telle sorte que le rouleau (50) supporté sur la portion à petit diamètre est situé entre la rondelle (4) et la portion de bague (8) en forme de bride.

7. Mécanisme de prévention de fuite de liquide selon la revendication 6, dans lequel ladite portion de bague (8) possède un diamètre tel que la portion de bague (8), conjointement avec la rondelle (4), est à même d'empêcher une couronne externe (9), lorsqu'elle constitue une partie du rouleau (50), d'éjecter par glissement une couronne interne (10) qui constitue une autre partie du rouleau (50).

8. Mécanisme de prévention de fuite de liquide selon l'une quelconque des revendications précédentes, dans lequel le réservoir de liquide (19) est monté sur une table mobile (18) dans un appareil d'étincelage par fil, l'élément (16) représentant un bras inférieur de la machine d'étincelage par fil qui traverse une portion approximativement centrale de la plaque d'étanchéification (6), la plaque d'étanchéification (6) se déplaçant latéralement sur les rouleaux rotatifs (30) lorsque le réservoir de liquide se déplace par rapport à la plaque d'étanchéification (6) et par rapport à l'élément (16) lorsque la table mobile (18) se déplace.
